# EUROPEAN PATENT APPLICATION

(11) **EP 4 651 227 A1**
(43) Date of publication of application: **19.11.2025**
(21) Application number: 25748059.0
(22) Date of filing: 25.02.2025
(51) Int. Cl.: H01M 4/136, H01M 4/62, H01M 10/0525

(54) **ELECTRODE SHEET, AND LITHIUM-ION BATTERY CONTAINING SAME**

(30) Priority: 10.09.2024 CN 202411266532
(71) Applicant: Eve Power Co., Ltd., Jingmen, Hubei 448000 (CN)
(72) Inventor: ZHOU, Qing, Jingmen, Hubei 448000 (CN); WANG, Kai, Jingmen, Hubei 448000 (CN); ZHU, Weihua, Jingmen, Hubei 448000 (CN); WEI, Haitao, Jingmen, Hubei 448000 (CN)
(74) Representative: Regimbeau
(86) International application number: PCT/CN2025/078969
(87) International publication number: WO 2025/162499

(57) **Abstract**

The present application belongs to the field of lithium-ion batteries. Provided in the present application are an electrode sheet and a lithium-ion battery including the same; the active layer of the electrode sheet includes a first layer and a second layer, wherein the first layer is disposed close to the current collector, the second layer is disposed on one side of the first layer which is facing away from the current collector, and the mass percentage of the binder in the first layer is greater than that of the second layer; by redistributing the binder, the peeling force and adhesion are ensured, and simultaneously the migration of the binder is improved; the influence of binder migration on uniformity and conductivity is reduced, thereby, the manufacturability and electrical properties such as energy density of the electrode sheet are improved, and the electrode sheet is very suitable for the lithium manganese iron phosphate cathode with small particle size and large specific surface area and the batteries including the same.

## Description

This application claims priority to Chinese Patent Application No. 202411266532X filed with CNIPA on September 10, 2024, the disclosure of which is incorporated herein by reference in its entirety.

### TECHNICAL FIELD

The present application relates to the field of lithium-ion batteries, and specifically relates to an electrode sheet and a lithium-ion battery including the same.

### BACKGROUND

In the current context of the global energy transition, the rapid progress of new energy technology has greatly promoted the development of battery materials. Lithium manganese iron phosphate (LMFP), a cathode material with great potential, is gradually becoming the focus of attention in the field. LMFP has the advantages of lithium iron phosphate (LFP) such as safety and reliability, environmental friendliness, and good thermal stability, and also has significant improvement in energy density, cost-effectiveness, and cycle lifetime; such characteristics are essential for promoting the commercialization of new energy applications such as electric vehicles and large-scale energy storage systems.

### TECHNICAL PROBLEM

There are still some challenges in the commercial application of LMFP materials. First of all, the LMFP material generally has small particle size and large specific surface area, which is conducive to improving the reactivity to a certain degree, but may lead to particle agglomerating in the cathode slurry and poor dispersibility; meanwhile, in order to enhance the interconnection between the cathode particles, the usage amount of the cathode binder, such as PVDF, usually needs to be increased. However, the high content of the cathode binder occupies the space of active materials, which limits the room for improvement in energy density and power density of batteries, and hinders the application potential of LMFP material in energy-efficient batteries.

In addition, another challenge existing in the manufacturing process of LMFP batteries is that in the baking process of the anode sheet, the commonly used anode binder, styrene-butadiene rubber (SBR), tends to float up, which weakens the adhesion of the first layer, and drives the anode conductive agent, such as Super P, to float up together, seriously affecting the electrical conductivity, thus affecting the charging-discharging efficiency and cycle lifetime of the batteries.

Therefore, it is necessary to optimize and improve the electrode solution of lithium-ion batteries to overcome the above shortcomings and to effectively promote the manufacture and application of high-performance lithium manganese iron phosphate batteries.

### TECHNICAL SOLUTION

The present application provides an electrode sheet and a lithium-ion battery including the same. The active layer of the electrode sheet includes a first layer and a second layer, wherein the first layer is disposed close to the current collector, the second layer is disposed on one side of the first layer which is facing away from the current collector, and the mass percentage of the binder in the first layer is greater than that of the second layer; by redistributing the binder, the peeling force and adhesion are ensured, and simultaneously the migration of the binder is improved; the influence of binder migration on uniformity and conductivity is reduced, thereby, the manufacturability and electrical properties such as energy density of the electrode sheet are improved, and the electrode sheet is very suitable for the lithium manganese iron phosphate cathode with small particle size and large specific surface area and the batteries including the same.

In a first aspect, the present application provides an electrode sheet, which includes a current collector and an active layer disposed on the current collector; the active layer includes a first layer and a second layer, wherein the first layer is disposed close to the current collector, and the second layer is disposed on one side of the first layer which is facing away from the current collector, wherein a mass percentage of a binder in the first layer is greater than a mass percentage of a binder in the second layer
In a second aspect, the present application provides a lithium-ion battery, which includes the electrode sheet as described in the first aspect.

### BENIFICIAL EFFECTS

Compared with the related technical solutions, the present application has at least the following beneficial effects.

In the present application, the active layer has two layers: the higher one and the lower one, and the mass percentage of the binder in the first layer close to the current collector is increased; hence, the peeling force and adhesion are increased during the manufacturing process of the electrode sheet, the defect of powder loss at the edge can be solved, and the peeling force can be improved by 2 times or more in the coating and cold pressing; moreover, the migration of the binder can also be improved, so that the uniformity of redistributed binder after migration (floating up) to the second layer is improved, and the influences of binder migration on the adhesion and the distribution of conductive agent are alleviated, thus improving the conductivity and effectively reducing the internal resistance; meanwhile, due to the presence of the first layer, the mass percentage of the binder in the second layer can be reduced, and the total usage amount of the binder in the active layer can be reduced, thereby providing more space for the active material and fully enhancing the energy density.

Other aspects will be appreciated upon reading and understanding the attached drawings and detailed description.

### BRIEF DESCRIPTION OF DRAWINGS

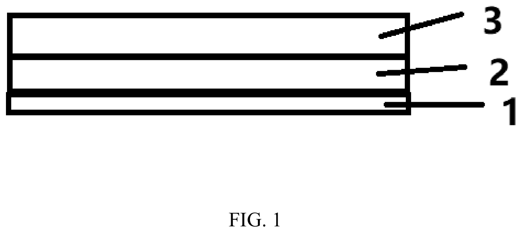

FIG. 1 is a structural diagram of an electrode sheet in an embodiment of the present application.

Reference: 1-current collector, 2-first layer, and 3-second layer.

### EMBODIMENTS OF THE PRESENT APPLICATION

In a first aspect, the present application provides an electrode sheet, which includes a current collector and an active layer disposed on the current collector, and the active layer includes a first layer and a second layer, wherein the first layer is disposed close to the current collector, the second layer is disposed on one side of the first layer which is facing away from the current collector, wherein a mass percentage of a binder in the first layer is greater than a mass percentage of a binder the second layer.

In the present application, by increasing the mass percentage of the binder in the first layer close to the current collector, the peeling force and adhesion are increased during the manufacturing process of the electrode sheet, the defect of powder loss at the edge can be solved, and the peeling force can be improved by 2 times or more in the coating and cold pressing; moreover, the migration of the binder can also be improved, so that the uniformity of redistributed binder after migration (floating up) to the second layer is improved, and the influences of binder migration on the adhesion and the distribution of conductive agent are alleviated, thus improving the conductivity and effectively reducing the internal resistance; meanwhile, due to the presence of the first layer, the mass percentage of the binder in the second layer can be reduced, and the total usage amount of the binder in the active layer can be reduced, thereby providing more space for the active material and fully enhancing the energy density.

In one embodiment, the structure of the electrode sheet is shown in FIG. 1; the electrode sheet includes a current collector 1 and an active layer disposed on the current collector 1, and the active layer includes a first layer 2 and a second layer 3, wherein the first layer 2 is disposed close to the current collector, and the second layer 3 is disposed on one side of the first layer 2 which is facing away from the current collector, wherein the mass percentage of the binder in the first layer 2 is greater than the mass percentage of the binder in the second layer 3.

The following is optional technical solutions of the present application, but not a limitation of the technical solutions provided in the present application, and the technical purpose and beneficial effects of the present application can be better achieved and realized through the following technical solutions.

As an optional technical solution of the present application, when the electrode sheet is used as a cathode, the active layer includes a cathode active material, a cathode conductive agent, and a cathode binder.

Optionally, the cathode active material includes lithium manganese iron phosphate.

The solution about electrode sheet of the present application is very suitable for the cathode of lithium manganese iron phosphate with a small particle size and a large specific surface area, by which the cathode of lithium manganese iron phosphate can fully achieve its advantages and potential of energy density to give a cathode sheet with better electrical performance.

Optionally, the cathode binder includes PVDF.

As an optional technical solution of the present application, based on a mass of the active layer of the cathode being 100%, a total mass percentage of the cathode binder is 0.1%-2%, for example, 0.1%, 0.3%, 0.5%, 0.8%, 1%, 1.2%, 1.4%, 1.6%, 1.8%, or 2%; the total mass percentage is optionally 0.5%-1.8%, and further optionally 1.2%-1.6%.

In related technologies, the total mass percentage of the binder in the active layer is generally 3%-4%, and the solution about electrode sheet of the present application can ensure sufficient adhesion between particles and high peeling force of the active layer, and can effectively reduce the total usage amount of the binder.

Optionally, based on a mass of the cathode active layer being 100%, a total mass percentage of the active material of the cathode is 96%-98%, for example, 96%, 96.2%, 96.4%, 96.6%, 96.8%, 97%, 97.2%, 97.4%, 97.6%, 97.8%, or 98%; a total mass percentage of the cathode binder is 0.5%-1.8%, for example, 0.5%, 0.6%, 0.7%, 0.8%, 0.9%, 1%, 1.1%, 1.2%, 1.3%, 1.4%, 1.5%, 1.6%, 1.7%, or 1.8%; a total mass percentage of the cathode conductive agent is 0.2%-3.5%, for example, 0.2%, 0.5%, 0.8%, 1%, 1.3%, 1.5%, 1.8%, 2%, 2.3%, 2.5%, 2.8%, 3%, 3.2%, or 3.5%.

As an optional technical solution of the present application, in the active layer of the cathode, a mass percentage of the cathode binder in the first layer is 1.1-2.5 times a mass percentage of the cathode binder in the second layer, for example, 1.1 times, 1.2 times, 1.3 times, 1.4 times, 1.5 times, 1.6 times, 1.7 times, 1.8 times, 1.9 times, 2 times, 2.1 times, 2.2 times, 2.3 times, 2.4 times, or 2.5 times.

In the present application, the overly large difference between the binder contents of the first layer and the second layer will easily lead to the loss of the adhesion and peeling force of the second layer, and affect the energy density and electrical properties of the first layer, and also cause the sharply increased viscosity of the slurry of the first layer, affecting the manufacturing process of the electrode sheet.

As an optional technical solution of the present application, when the electrode sheet is used as an anode, the active layer includes an anode active material, an anode conductive agent, and an anode binder.

Optionally, the anode binder includes SBR.

In the baking process of the anode sheet, the SBR binder tends to float up. Therefore, in the present application, further optionally, the mass percentage of SBR in the first layer is greater than the mass percentage of SBR in the second layer in the anode; thereby, in the process of drying the anode sheet, the floating up of SBR in the first layer drives the floating up of SP, thus uniformly distributing the conductive agent and binder inside the whole anode sheet.

As an optional technical solution of the present application, based on a mass of the active layer of the anode being 100%, a total mass percentage of the anode binder is 0.1%-4%, for example, 0.1%, 0.3%, 0.5%, 0.8%, 1%, 1.2%, 1.4%, 1.6%, 1.8%, 2%, 2.2%, 2.4%, 2.6%, 2.8%, 3%, 3.2%, 3.4%, 3.6%, 3.8%, or 4%.

Optionally, based on a mass of the active layer of the anode being 100%, a total mass percentage of the anode active material is 95%-99%, for example, 95%, 95.2%, 95.4%, 95.6%, 95.8%, 96%, 96.2%, 96.4%, 96.6%, 96.8%, 97%, 97.2%, 97.4%, 97.6%, 97.8%, or 98%; a total mass percentage of the anode binder is 0.8%-3%, for example, 0.8%, 1%, 1.2%, 1.4%, 1.6%, 1.8%, 2%, 2.2%, 2.4%, 2.6%, 2.8%, or 3%; a total mass percentage of the anode conductive agent is 0.2%-2%, for example, 0.2%, 0.4%, 0.6%, 0.8%, 1%, 1.2%, 1.4%, 1.6%, 1.8%, or 2%.

As an optional technical solution of the present application, in the active layer of the anode, a mass percentage of the anode binder in the first layer is 1.1-5 times a mass percentage of the anode binder in the second layer, for example, 1.1 times, 1.2 times, 1.3 times, 1.4 times, 1.5 times, 1.6 times, 1.7 times, 1.8 times, 1.9 times, 2 times, 2.1 times, 2.2 times, 2.3 times, 2.4 times, 2.5 times, 2.8 times, 3 times, 3.3 times, 3.5 times, 3.8 times, 4 times, 4.3 times, 4.5 times, 4.8 times, or 5 times.

As an optional technical solution of the present application, in the active layer of the anode, a mass percentage of the anode conductive agent in the first layer is 1.1-5 times a mass percentage of the anode conductive agent in the second layer, for example, 1.1 times, 1.2 times, 1.3 times, 1.4 times, 1.5 times, 1.6 times, 1.7 times, 1.8 times, 1.9 times, 2 times, 2.1 times, 2.2 times, 2.3 times, 2.4 times, 2.5 times, 2.8 times, 3 times, 3.3 times, 3.5 times, 3.8 times, 4 times, 4.3 times, 4.5 times, 4.8 times, or 5 times.

In a second aspect, the present application provides a lithium-ion battery, which includes the electrode sheet as described in the first aspect.

As an optional technical solution of the present application, the lithium-ion battery includes a lithium manganese iron phosphate battery, and a cathode and an anode of the lithium manganese iron phosphate battery are both the electrode sheet.

Due to space constraints and in order to avoid redundancy, the point values within the above numerical ranges are not listed exhaustively in the present application, but are not limited to the listed values, and other unlisted values within the numerical ranges are also applicable.

The technical solutions of the present application are further described below in terms of specific embodiments.

It should be clear to those skilled in the art that the embodiments are merely used for a better understanding of the present application and should not be regarded as a specific limitation to the present application.

### Example 1

This example provides an electrode sheet:
the electrode sheet was a cathode, which included a cathode current collector and a cathode active layer disposed on the cathode current collector, and the cathode active layer included a first layer of the cathode and a second layer of the cathode, wherein the first layer of the cathode was disposed on the cathode current collector, the second layer of the cathode was disposed on one side of the first layer of the cathode which was facing away from the cathode current collector;
based on the mass of the cathode active layer being 100%, the cathode active layer included 96.9% of the cathode active material, lithium manganese iron phosphate, 1.1% of the cathode conductive agent (Super P and CNT with a mass ratio of 1:1), and 2% of the cathode binder PVDF;
based on the mass of the second layer of the cathode being 100%, the second layer of the cathode included 97.7% of the cathode active material, lithium manganese iron phosphate, 1.1% of the cathode conductive agent (Super P and CNT with a mass ratio of 1:1), and 1.2% of the cathode binder PVDF;
based on the mass of the first layer of the cathode being 100%, the first layer of the cathode included 96.1% of the cathode active material, lithium manganese iron phosphate, 1.1% of the cathode conductive agent (Super P and CNT with a mass ratio of 1:1), and 2.8% of the cathode binder PVDF; and
in the cathode active layer, the ratio of the mass percentage of the cathode binder in the first layer of the cathode to the mass percentage of the cathode binder in the second layer of the cathode was 2.33:1.

### Example 2

This example provides an electrode sheet; in the electrode sheet, the total mass percentage of the cathode binder was changed, and the mass percentage ratio of the cathode binder in the first layer of the cathode to the cathode binder in the second layer of the cathode was maintained at 2.33:1, i.e.,
based on the mass of the cathode active layer being 100%, the cathode active layer included 97.2% of the cathode active material, 1.1% of the cathode conductive agent, and 1.7% of the cathode binder;
based on the mass of the second layer of the cathode being 100%, the second layer of the cathode included 97.88% of the cathode active material, 1.1% of the cathode conductive agent, and 1.02% of the cathode binder;
based on the mass of the first layer of the cathode being 100%, the first layer of the cathode included 96.52% of the cathode active material, 1.1% of the cathode conductive agent, and 2.38% of the cathode binder; and
except for the above, other conditions were exactly the same as those of Example 1.

### Example 3

This example provides an electrode sheet; in the electrode sheet, the total mass percentage of the cathode binder was changed, and the mass percentage ratio of the cathode binder in the first layer of the cathode to the cathode binder in the second layer of the cathode was maintained at 2.33:1, i.e.,
based on the mass of the cathode active layer being 100%, the cathode active layer included 97.5% of the cathode active material, 1.1% of the cathode conductive agent, and 1.4% of the cathode binder;
based on the mass of the second layer of the cathode being 100%, the second layer of the cathode included 98.06% of the cathode active material, 1.1% of the cathode conductive agent, and 0.84% of the cathode binder;
based on the mass of the first layer of the cathode being 100%, the first layer of the cathode included 96.94% of the cathode active material, 1.1% of the cathode conductive agent, and 1.96% of the cathode binder; and
except for the above, other conditions were exactly the same as those of Example 1.

### Example 4

This example provides an electrode sheet; in the electrode sheet, the total mass percentage of the cathode binder was changed, and the mass percentage ratio of the cathode binder in the first layer of the cathode to the cathode binder in the second layer of the cathode was maintained at 2.33:1, i.e.,
based on the mass of the cathode active layer being 100%, the cathode active layer included 96.6% of the cathode active material, 1.1% of the cathode conductive agent, and 2.3% of the cathode binder;
based on the mass of the second layer of the cathode being 100%, the second layer of the cathode included 97.52% of the cathode active material, 1.1% of the cathode conductive agent, and 1.38% of the cathode binder;
based on the mass of the first layer of the cathode being 100%, the first layer of the cathode included 95.68% of the cathode active material, 1.1% of the cathode conductive agent, and 3.22% of the cathode binder; and
except for the above, other conditions were exactly the same as those of Example 1.

### Example 5

This example provides an electrode sheet; in the electrode sheet, the total mass percentage of the cathode binder was unchanged, and the mass percentage ratio of the cathode binder in the first layer of the cathode to the cathode binder in the second layer of the cathode was changed to 1.1:1, i.e.,
based on the mass of the second layer of the cathode being 100%, the second layer of the cathode included 97% of the cathode active material, 1.1% of the cathode conductive agent, and 1.9% of the cathode binder;
based on the mass of the first layer of the cathode being 100%, the first layer of the cathode included 96.8% of the cathode active material, 1.1% of the cathode conductive agent, and 2.1% of the cathode binder; and
except for the above, other conditions were exactly the same as those of Example 1.

### Example 6

This example provides an electrode sheet; in the electrode sheet, the total mass percentage of the cathode binder was unchanged, and the mass percentage ratio of the cathode binder in the first layer of the cathode to the cathode binder in the second layer of the cathode was changed to 2.5:1, i.e.,
based on the mass of the second layer of the cathode being 100%, the second layer of the cathode included 97.76% of the cathode active material, 1.1% of the cathode conductive agent, and 1.14% of the cathode binder;
based on the mass of the first layer of the cathode being 100%, the first layer of the cathode included 96.04% of the cathode active material, 1.1% of the cathode conductive agent, and 2.86% of the cathode binder; and
except for the above, other conditions were exactly the same as those of Example 1.

### Example 7

This example provides an electrode sheet; in the electrode sheet, the total mass percentage of the cathode binder was unchanged, and the mass percentage ratio of the cathode binder in the first layer of the cathode to the cathode binder in the second layer of the cathode was changed to 2.8:1, i.e.,
based on the mass of the second layer of the cathode being 100%, the second layer of the cathode included 97.85% of the cathode active material, 1.1% of the cathode conductive agent, and 1.05% of the cathode binder;
based on the mass of the first layer of the cathode being 100%, the first layer of the cathode included 95.95% of the cathode active material, 1.1% of the cathode conductive agent, and 2.95% of the cathode binder; and
except for the above, other conditions were exactly the same as those of Example 1.

### Example 8

This example provides an electrode sheet:
the electrode sheet was an anode, which included an anode current collector and an anode active layer disposed on the anode current collector, and the anode active layer included a first layer of the anode and a second layer of the anode, wherein the first layer of the anode was disposed on the anode current collector, and the second layer of the anode was disposed on one side of the first layer of the anode which was facing away from the anode current collector;
based on the mass of the anode active layer being 100%, the anode active layer included 96.7% of the anode active material graphite, 0.6% of the anode conductive agent Super P, and 2.7% of the anode binder (1.5% of SBR and 1.2% of CMC);
based on the mass of the second layer of the anode being 100%, the second layer of the anode included 97.96% of the anode active material graphite, 0.24% of the anode conductive agent Super P, and 1.8% of the anode binder (0.6% of SBR and 1.2% of CMC);
based on the mass of the first layer of the anode being 100%, the first layer of the anode included 95.44% of the anode active material graphite, 0.96% of the anode conductive agent Super P, and 3.6% of the anode binder (2.4% of SBR and 1.2% of CMC); and
in the anode active layer, the ratio of the mass percentage of the anode binder in the first layer of the anode to the mass percentage of the anode binder in the second layer of the anode was 2:1; the ratio of the mass percentage of the anode binder SBR in the first layer of the anode to the mass percentage of the anode binder SBR in the second layer of the anode was 4:1; and the ratio of the mass percentage of the anode conductive agent in the first layer of the anode to the mass percentage of the anode conductive agent in the second layer of the anode was 4:1.

### Example 9

This example provides an electrode sheet; in the electrode sheet, the total mass percentage of the anode binder was changed, the mass percentage ratio of the anode binder in the first layer of the anode to the anode binder in the second layer of the anode was maintained at 2: 1, the mass percentage ratio of SBR in the first layer of the anode to SBR in the second layer of the anode was maintained at 4:1, and the ratio of the mass percentage of the anode conductive agent in the first layer of the anode to the mass percentage of the anode conductive agent in the second layer of the anode was maintained at 4:1, i.e.,
based on the mass of the anode active layer being 100%, the anode active layer included 97.3% of the anode active material graphite, 0.6% of the anode conductive agent Super P, and 2.1% of the anode binder (1.17% of SBR and 0.93% of CMC);
based on the mass of the second layer of the anode being 100%, the second layer of the anode included 98.36% of the anode active material graphite, 0.24% of the anode conductive agent Super P, and 1.4% of the anode binder (0.47% of SBR and 0.93% of CMC);
based on the mass of the first layer of the anode being 100%, the first layer of the anode included 96.24% of the anode active material graphite, 0.96% of the anode conductive agent Super P, and 2.8% of the anode binder (1.87% of SBR and 0.93% of CMC); and
except for the above, other conditions were exactly the same as those of Example 8.

### Example 10

This example provides an electrode sheet; in the electrode sheet, the total mass percentage of the anode binder was changed, the mass percentage ratio of the anode binder in the first layer of the anode to the anode binder in the second layer of the anode was maintained at 2:1, the mass percentage ratio of SBR in the first layer of the anode to SBR in the second layer of the anode was maintained at 4:1, and the ratio of the mass percentage of the anode conductive agent in the first layer of the anode to the mass percentage of the anode conductive agent in the second layer of the anode was maintained at 4:1, i.e.,
based on the mass of the anode active layer being 100%, the anode active layer included 96.1% of the anode active material graphite, 0.6% of the anode conductive agent Super P, and 3.3% of the anode binder (1.83% of SBR and 1.47% of CMC);
based on the mass of the second layer of the anode being 100%, the second layer of the anode included 97.56% of the anode active material graphite, 0.24% of the anode conductive agent Super P, and 2.2% of the anode binder (0.73% of SBR and 1.47% of CMC);
based on the mass of the first layer of the anode being 100%, the first layer of the anode included 94.64% of the anode active material graphite, 0.96% of the anode conductive agent Super P, and 4.4% of the anode binder (2.93% of SBR and 1.47% of CMC); and
except for the above, other conditions were exactly the same as those of Example 8.

### Example 11

This example provides an electrode sheet; in the electrode sheet, the total mass percentage of the anode binder was unchanged, the mass percentage ratio of the anode binder in the first layer of the anode to the anode binder in the second layer of the anode was maintained at 2:1, the mass percentage ratio of SBR in the first layer of the anode to SBR in the second layer of the anode was changed to 0.88:1, and the mass percentage ratio of the anode conductive agent in the first layer of the anode to the anode conductive agent in the second layer of the anode was maintained at 4:1, i.e.,
based on the mass of the second layer of the anode being 100%, the anode binder, composed of 1.6% SBR and 0.2% CMC, had a mass percentage of 1.8% in the second layer of the anode;
based on the mass of the first layer of the anode being 100%, the anode binder, composed of 1.4% SBR and 2.2% CMC, had a mass percentage of 3.6% in the first layer of the anode; and
except for the above, other conditions were exactly the same as those of Example 8.

### Example 12

This example provides an electrode sheet; in the electrode sheet, the total mass percentage of the anode binder was unchanged, the mass percentage ratio of the anode binder in the first layer of the anode to the anode binder in the second layer of the anode was maintained at 2:1, the mass percentage ratio of SBR in the first layer of the anode to SBR in the second layer of the anode was changed to 1.14:1, and the mass percentage ratio of the anode conductive agent in the first layer of the anode to the anode conductive agent in the second layer of the anode was maintained at 4:1, i.e.,
based on the mass of the second layer of the anode being 100%, the anode binder, composed of 1.4% SBR and 0.4% CMC, had a mass percentage of 1.8% in the second layer of the anode;
based on the mass of the first layer of the anode being 100%, the anode binder, composed of 1.6% SBR and 2% CMC, had a mass percentage of 3.6% in the first layer of the anode; and
except for the above, other conditions were exactly the same as those of Example 8.

### Example 13

This example provides an electrode sheet; in the electrode sheet, the total mass percentage of the anode binder was unchanged, the mass percentage ratio of the anode binder in the first layer of the anode to the anode binder in the second layer of the anode was maintained at 2:1, the mass percentage ratio of SBR in the first layer of the anode to SBR in the second layer of the anode was changed to 2:1, and the mass percentage ratio of the anode conductive agent in the first layer of the anode to the anode conductive agent in the second layer of the anode was maintained at 4:1, i.e.,
based on the mass of the second layer of the anode being 100%, the anode binder, composed of 1% SBR and 0.8% CMC, had a mass percentage of 1.8% in the second layer of the anode;
based on the mass of the first layer of the anode being 100%, the anode binder, composed of 2% SBR and 1.6% CMC, had a mass percentage of 3.6% in the first layer of the anode; and
except for the above, other conditions were exactly the same as those of Example 8.

### Example 14

This example provides an electrode sheet; in the electrode sheet, the total mass percentage of the anode binder was unchanged, the mass percentage ratio of the anode binder in the first layer of the anode to the anode binder in the second layer of the anode was maintained at 2:1, the mass percentage ratio of SBR in the first layer of the anode to SBR in the second layer of the anode was changed to 5:1, and the mass percentage ratio of the anode conductive agent in the first layer of the anode to the anode conductive agent in the second layer of the anode was maintained at 4:1, i.e.,
based on the mass of the second layer of the anode being 100%, the anode binder, composed of 0.5% SBR and 1.3% CMC, had a mass percentage of 1.8% in the second layer of the anode;
based on the mass of the first layer of the anode being 100%, the anode binder, composed of 2.5% SBR and 1.1% CMC, had a mass percentage of 3.6% in the first layer of the anode; and
except for the above, other conditions were exactly the same as those of Example 8.

### Example 15

This example provides an electrode sheet; in the electrode sheet, the total mass percentage of the anode binder was unchanged, the mass percentage ratio of the anode binder in the first layer of the anode to the anode binder in the second layer of the anode was changed to 1.1:1, but the mass percentage ratio of SBR in the first layer of the anode to SBR in the second layer of the anode was maintained at 4:1, and the mass percentage ratio of the anode conductive agent in the first layer of the anode to the anode conductive agent in the second layer of the anode was maintained at 4:1, i.e.,
based on the mass of the second layer of the anode being 100%, the second layer of the anode included 97.19% of the anode active material graphite, 0.24% of the anode conductive agent Super P, and 2.57% of the anode binder (0.6% of SBR and 1.97% of CMC);
based on the mass of the first layer of the anode being 100%, the first layer of the anode included 96.21% of the anode active material graphite, 0.96% of the anode conductive agent Super P, and 2.83% of the anode binder (2.4% of SBR and 0.43% of CMC); and
except for the above, other conditions were exactly the same as those of Example 8.

### Example 16

This example provides an electrode sheet; in the electrode sheet, the total mass percentage of the anode binder was unchanged, the mass percentage ratio of the anode binder in the first layer of the anode to the anode binder in the second layer of the anode was changed to 4:1, but the mass percentage ratio of SBR in the first layer of the anode to SBR in the second layer of the anode was maintained at 4:1, and the mass percentage ratio of the anode conductive agent in the first layer of the anode to the anode conductive agent in the second layer of the anode was maintained at 4:1, i.e.,
based on the mass of the second layer of the anode being 100%, the second layer of the anode included 98.68% of the anode active material graphite, 0.24% of the anode conductive agent Super P, and 1.08% of the anode binder (0.6% of SBR and 0.48% of CMC);
based on the mass of the first layer of the anode being 100%, the first layer of the anode included 94.72% of the anode active material graphite, 0.96% of the anode conductive agent Super P, and 4.32% of the anode binder (2.4% of SBR and 1.92% of CMC); and
except for the above, other conditions were exactly the same as those of Example 8.

### Example 17

This example provides an electrode sheet; in the electrode sheet, the total mass percentage of the anode binder was unchanged, the mass percentage ratio of the anode binder in the first layer of the anode to the anode binder in the second layer of the anode was changed to 5:1, but the mass percentage ratio of SBR in the first layer of the anode to SBR in the second layer of the anode was maintained at 4:1, and the mass percentage ratio of the anode conductive agent in the first layer of the anode to the anode conductive agent in the second layer of the anode was maintained at 4:1, i.e.,
based on the mass of the second layer of the anode being 100%, the second layer of the anode included 98.86% of the anode active material graphite, 0.24% of the anode conductive agent Super P, and 0.9% of the anode binder (0.6% of SBR and 0.3% of CMC);
based on the mass of the first layer of the anode being 100%, the first layer of the anode included 94.54% of the anode active material graphite, 0.96% of the anode conductive agent Super P, and 4.5% of the anode binder (2.4% of SBR and 2.1% of CMC); and
except for the above, other conditions were exactly the same as those of Example 8.

### Example 18

This example provides an electrode sheet; in the electrode sheet, the total mass percentage of the anode binder was unchanged, the mass percentage ratio of the anode binder in the first layer of the anode to the anode binder in the second layer of the anode was maintained at 2:1, the mass percentage ratio of SBR in the first layer of the anode to SBR in the second layer of the anode was maintained at 4:1, and the mass percentage ratio of the anode conductive agent in the first layer of the anode to the anode conductive agent in the second layer of the anode was changed to 1:1, i.e.,
based on the mass of the second layer of the anode being 100%, the second layer of the anode included 97.6% of the anode active material graphite, 0.6% of the anode conductive agent Super P, and 1.8% of the anode binder (0.6% of SBR and 1.2% of CMC);
based on the mass of the first layer of the anode being 100%, the first layer of the anode included 95.8% of the anode active material graphite, 0.6% of the anode conductive agent Super P, and 3.6% of the anode binder (2.4% of SBR and 1.2% of CMC); and
except for the above, other conditions were exactly the same as those of Example 8.

### Comparative Example 1

This comparative example provides an electrode sheet, and the cathode active layer of the electrode sheet is not layered, i.e.,
the electrode sheet was a cathode, which included a cathode current collector and a cathode active layer disposed on the cathode current collector; based on the mass of the cathode active layer being 100%, the cathode active layer included 96.9% of the cathode active material lithium manganese iron phosphate, 1.1% of the cathode conductive agent (Super P and CNT with a mass ratio of 1:1), and 2% of the cathode binder PVDF.

### Comparative Example 2

This comparative example provides an electrode sheet, and the cathode active layer of the electrode sheet is not layered, i.e.,
the electrode sheet was an anode, which included an anode current collector and an anode active layer disposed on the anode current collector; based on the mass of the anode active layer being 100%, the anode active layer included 96.7% of the anode active material graphite, 0.6% of the anode conductive agent Super P, and 2.7% of the cathode binder (1.5% of SBR and 1.2% of CMC).

### Comparative Example 3

This comparative example provides an electrode sheet; in the electrode sheet, the total mass percentage of the anode binder was unchanged, the mass percentage ratio of the anode binder in the first layer of the anode to the anode binder in the second layer of the anode was changed to 1:1, the mass percentage ratio of SBR in the first layer of the anode to SBR in the second layer of the anode was changed to 1:1, and the mass percentage ratio of the anode conductive agent in the first layer of the anode to the anode conductive agent in the second layer of the anode was changed to 4:1, i.e.,
based on the mass of the second layer of the anode being 100%, the second layer of the anode included 97.06% of the anode active material graphite, 0.24% of the anode conductive agent Super P, and 2.7% of the anode binder (1.5% of SBR and 1.2% of CMC);
based on the mass of the first layer of the anode being 100%, the first layer of the anode included 96.34% of the anode active material graphite, 0.96% of the anode conductive agent Super P, and 2.7% of the anode binder (1.5% of SBR and 1.2% of CMC); and
except for the above, other conditions were exactly the same as those of Example 8.

### Comparative Example 4

This comparative example provides an electrode sheet; in the electrode sheet, the total mass percentage of the anode binder was unchanged, the mass percentage ratio of the anode binder in the first layer of the anode to the anode binder in the second layer of the anode was changed to 1:1, the mass percentage ratio of SBR in the first layer of the anode to SBR in the second layer of the anode was changed to 4:1, and the mass percentage ratio of the anode conductive agent in the first layer of the anode to the anode conductive agent in the second layer of the anode was changed to 4:1, i.e.,
based on the mass of the second layer of the anode being 100%, the second layer of the anode included 97.06% of the anode active material graphite, 0.24% of the anode conductive agent Super P, and 2.7% of the anode binder (0.6% of SBR and 2.1% of CMC);
based on the mass of the first layer of the anode being 100%, the first layer of the anode included 96.34% of the anode active material graphite, 0.96% of the anode conductive agent Super P, and 2.7% of the anode binder (2.4% of SBR and 0.3% of CMC); and
except for the above, other conditions were exactly the same as those of Example 8.

### Characterization and tests

### I. Test on peeling force

The electrode sheets in Examples 1-7 and Comparative Example 1 were prepared using the same cathode preparation process, and similarly, the electrode sheets in Examples 8-18 and Comparative Examples 2-4 were prepared using the same anode preparation process;
the electrode sheets obtained in Examples 1-18 and Comparative Examples 1-4 were tested for coating peeling force and cold-pressing peeling force during the manufacturing process, and the results obtained are recorded in Table 1;

**Table 1**

| Cathode Sheet | Coating peeling force/N | Cold-pressing peeling force/N |
|---|---|---|
| Example 1 | 0.12 | 0.24 |
| Example 2 | 0.10 | 0.20 |
| Example 3 | 0.08 | 0.16 |
| Example 4 | 0.14 | 0.28 |
| Example 5 | 0.10 | 0.20 |
| Example 6 | 0.12 | 0.25 |
| Example 7 | 0.13 | 0.26 |
| Comparative Example 1 | 0.08 | 0.15 |

| Anode sheet | Coating peeling force/N | Cold-pressing peeling force/N |
|---|---|---|
| Example 8 | 0.46 | 0.20 |
| Example 9 | 0.35 | 0.17 |
| Example 10 | 0.58 | 0.30 |
| Example 11 | 0.32 | 0.16 |
| Example 12 | 0.20 | 0.10 |
| Example 13 | 0.36 | 0.20 |
| Example 14 | 0.52 | 0.26 |
| Example 15 | 0.46 | 0.22 |
| Example 16 | 0.43 | 0.21 |
| Example 17 | 0.45 | 0.20 |
| Example 18 | 0.43 | 0.20 |
| Comparative Example 2 | 0.22 | 0.10 |
| Comparative Example 3 | 0.22 | 0.12 |
| Comparative Example 4 | 0.36 | 0.20 |

As shown by the results, the peeling force of the electrode sheet is directly proportional to the content of the binder contacting with the current collector, and the higher the content of the binder in the first layer, the higher the coating peeling force, and accordingly, the higher the peeling force after cold pressing. The content of CMC in the anode has little relationship with the peeling force, and the peeling force depends on the content of SBR.

II. Any one of the electrode sheets provided by Examples 1-7 and Comparative Example 1 was selected as the cathode, any one of the electrode sheets provided by Examples 8-18 and Comparative Examples 2-4 was selected as the anode, and the cathode and the anode were subjected to assembly. The cathode, a polyethylene separator, and the anode were stacked, and subjected to processes of lamination, drying, liquid injection (the electrolyte was 1 mol/L LiPF₆ in ethyl carbonate (EC) + dimethyl carbonate solution (DMC), and the mass percentage of additive: 2% of fluoroethylene carbonate (FEC)), encapsulation, formation and capacity determination, etc., to give the lithium manganese iron phosphate battery.

The obtained batteries were tested for the DC internal resistance of the cell (DCR) and the capacity attenuation percentage after 500 cycles (test conditions: 25°C, constant current charging at 2C, and constant current discharging at 1C), and the results obtained are recorded in Table 2.

**Table 2**

| Cathode | Anode | DCR/mQ | Capacity attenuation |
|---|---|---|---|
| Example 1 | Example 8 | 0.24 | 2.34% |
| Example 2 | Example 8 | 0.24 | 2.46% |
| Example 3 | Example 8 | 0.24 | 2.62% |
| Example 4 | Example 8 | 0.25 | 2.13% |
| Example 5 | Example 8 | 0.24 | 2.48% |
| Example 6 | Example 8 | 0.24 | 2.36% |
| Example 7 | Example 8 | 0.24 | 2.24% |
| Example 1 | Example 9 | 0.24 | 2.28% |
| Example 1 | Example 10 | 0.24 | 2.14% |
| Example 1 | Example 11 | 0.22 | 2.20% |
| Example 1 | Example 12 | 0.20 | 2.18% |
| Example 1 | Example 13 | 0.18 | 2.05% |
| Example 1 | Example 14 | 0.16 | 1.95% |
| Example 1 | Example 15 | 0.24 | 2.64% |
| Example 1 | Example 16 | 0.24 | 2.42% |
| Example 1 | Example 17 | 0.24 | 2.23% |
| Example 1 | Example 18 | 0.30 | 2.60% |
| Example 1 | Comparative Example 2 | 0.31 | 2.64% |
| Example 1 | Comparative Example 3 | 0.24 | 2.34% |
| Example 1 | Comparative Example 4 | 0.24 | 2.34% |
| Comparative Example 1 | Comparative Example 2 | 0.34 | 2.84% |
| Comparative Example 1 | Comparative Example 3 | 0.24 | 2.54% |
| Comparative Example 1 | Comparative Example 4 | 0.24 | 2.68% |

As can be seen from the cells assembled by the cathode from Examples 2-4 and the anode from Example 8 in Table 2, the increase of binder content in the cathode scheme did not reduce the internal resistance of the cell, but the cycling attenuation decreased. The increase of the total binder content leads to a tighter combination of the cathode active material and current collector during the cell cycling, and the material conduction is not weakened with the increase of cycles. As shown by the cathode from Examples 5-7, because the anode electrons gather at the contact point between the first layer and the current collector during the charge/discharge process, the higher SBR content in the first layer gives a more significant effect.

As shown by the anode examples, the internal resistance of the cell decreases with the increase of the conductive agent content in the first layer. Changes of the binder do not affect the values of the internal resistance. However, the cycling performance of the anode is based on the joint actions of the conductive agent and the binder. With a lower internal resistance value, that is, with a higher conductive agent content in the first layer, the cycling performance is better; and with a higher binder content in the first layer, the cycling performance is better. Compared with Comparative Examples 1 and 2, the internal resistance and cycling performance of the cell having the layered components are significantly better than those of the non-layered homogeneous electrode.

## Claims

1. An electrode sheet, comprising a current collector and an active layer disposed on the current collector, wherein the active layer comprises a first layer and a second layer, wherein the first layer is disposed close to the current collector, and the second layer is disposed on one side of the first layer which is facing away from the current collector, wherein a mass percentage of a binder in the first layer is greater than a mass percentage of a binder in the second layer.

2. The electrode sheet according to claim 1, wherein in a case where the electrode sheet is used as a cathode, the active layer comprises a cathode active material, a cathode conductive agent, and a cathode binder.

3. The electrode sheet according to claim 2, wherein the cathode active material comprises lithium manganese iron phosphate.

4. The electrode sheet according to claim 2 or 3, wherein the cathode binder comprises PVDF.

5. The electrode sheet according to any one of claims 2-4, wherein based on a mass of the active layer of the cathode being 100%, a total mass percentage of the cathode binder is 0.1%-2%.

6. The electrode sheet according to any one of claims 2-5, wherein based on a mass of the active layer of the cathode being 100%, a total mass percentage of the cathode active material is 96%-98%, a total mass percentage of the cathode binder is 0.5%-1.8%, and a total mass percentage of the cathode conductive agent is 0.2%-3.5%.

7. The electrode sheet according to any one of claims 2-6, wherein in the active layer of the cathode, a mass percentage of the cathode binder in the first layer is 1.1-2.5 times a mass percentage of the cathode binder in the second layer.

8. The electrode sheet according to any one of claims 1-7, wherein in a case where the electrode sheet is used as an anode, the active layer comprises an anode active material, an anode conductive agent, and an anode binder.

9. The electrode sheet according to claim 8, wherein the anode binder comprises SBR.

10. The electrode sheet according to claim 8 or 9, wherein based on a mass of the active layer of the anode being 100%, a total mass percentage of the anode binder is 0.1%-4%.

11. The electrode sheet according to any one of claims 8-10, wherein based on a mass of the active layer of the anode being 100%, a total mass percentage of the anode active material is 95%-99%, a total mass percentage of the anode binder is 0.8%-3%, and a total mass percentage of the anode conductive agent is 0.2%-2%.

12. The electrode sheet according to any one of claims 8-11, wherein in the active layer of the anode, a mass percentage of the anode binder in the first layer is 1.1-5 times a mass percentage of the anode binder in the second layer.

13. The electrode sheet according to any one of claims 8-12, wherein in the active layer of the anode, a mass percentage of the anode conductive agent in the first layer is 1.1-5 times a mass percentage of the anode conductive agent in the second layer.

14. A lithium-ion battery, comprising the electrode sheet according to any one of claims 1-13.

15. The lithium-ion battery according to claim 14, wherein the lithium-ion battery comprises a lithium manganese iron phosphate battery, and a cathode and an anode of the lithium manganese iron phosphate battery are both the electrode sheet.
